# EUROPÄISCHE PATENTSCHRIFT

(11) **EP 1 254 556 B1**
(45) Veröffentlichungstag und Bekanntmachung des Hinweises auf die Patenterteilung: **09.11.2011**
(21) Anmeldenummer: 00901474.7
(22) Anmeldetag: 09.02.2000
(51) Int. Cl.: H04M 7/16

(54) **DECODIERGERÄT, DECODIERVERFAHREN UND CHIPKARTE**
DECODER, DECODING METHOD AND A CHIP CARD
APPAREIL DE DECODAGE, PROCEDE DE DECODAGE ET CARTE A PUCE

(43) Veröffentlichungstag der Anmeldung: 06.11.2002
(73) Patentinhaber: Swisscom AG, 3050 Bern (CH)
(72) Erfinder: LAUPER, Eric, CH-3014 Bern (CH); RITTER, Rudolf, CH-3052 Zollikofen (CH); BISCHOFF, Jean-Claude, CH-1774 Montagny-les-Monts (CH)
(74) Vertreter: P&TS SA (AG, Ltd.)
(86) Internationale Anmeldenummer: PCT/CH2000/000075
(87) Internationale Veröffentlichungsnummer: WO 2001/060036

(56) Entgegenhaltungen:
- EP-A- 0 723 373
- WO-A-90/10354
- WO-A-94/08408

## Beschreibung

### Technisches Gebiet

Die vorliegende Erfindung betrifft ein Decodiergerät, beispielsweise ein Decodiergerät, welches codierte digitale Daten decodiert, sowie ein Decodierverfahren und eine entsprechende Chipkarte.

### Stand der Technik

In einem Zahlfernsehsystem (Pay-TV) wählt der Empfänger die Programme oder die Daten, die er empfangen will und bezahlt für das Decodieren dieser Daten, die verschlüsselt ausgesendet werden. Es sind unter anderem Systeme bekannt, in welchen die Empfänger mit dem Fernsehsender ein Abonnement für unbegrenzte Benutzung der Daten abschliessen und Systeme, in welchen die Benutzer nur für die tatsächlich decodierten Daten beispielsweise anhand einer in das Decodiergerät eingeführten Chipkarte bezahlen müssen (Pay-per-view).

Um die Daten zu decodieren braucht der Empfänger im Allgemeinen ein Decodiergerät, mit welchem die vom Sender ausgesendeten Daten decodiert werden und die auch für die Ermittlung der Benutzungszeit und gegebenenfalls für die Belastung der Chipkarte mit dem zu verrechnenden Betrag zuständig sind. Nur die Benutzer, die über das passende Decodiergerät und den passenden Decodierungsschlüssel verfügen, können die im Broadcastmodus ausgesendeten Daten decodieren und in einer verständlichen Form wiedergeben.

Decodiergeräte werden auch in anderen Systemen verwendet, in welchen die ausgesendeten Daten, unter anderem im Broadcastmodus ausgesendete Daten, nur von berechtigten Empfängern wiedergegeben werden sollen, beispielsweise in Zusammenhang mit Internet oder mit Mobilfunksystemen.

Mit dem DAB- oder DVB (Digital Audio bzw. Video Broadcasting) System können zusätzlich zum Programm auch programmbegleitende und nicht programmbegleitende Daten im Broadcastmodus ausgesendet werden. Es wird oft erwünscht, diese Daten adressieren zu können, damit sie nur von berechtigten Empfängern mit einem passenden Decodiergerät und einem Decodierungsschlüssel decodiert werden können.

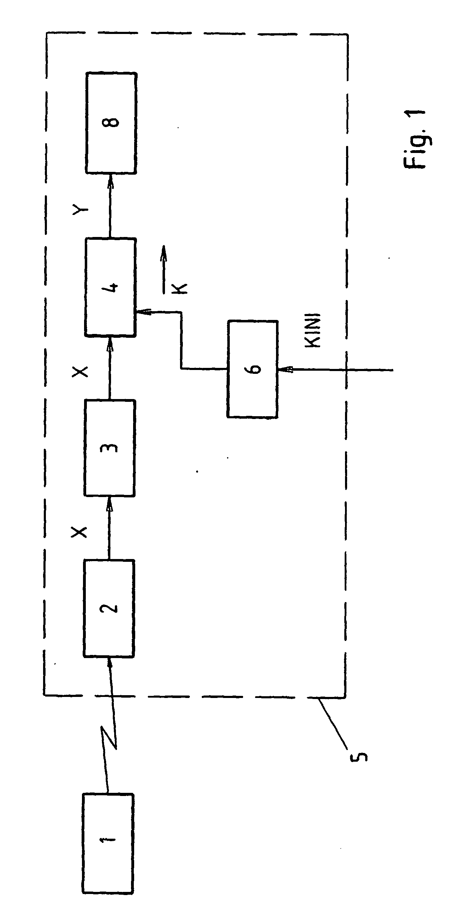

Die Figur 1 zeigt schematisch ein bekanntes Decodierungssystem mit einem Sender 1, der Daten, beispielsweise Bilddaten, an eine Vielzahl von Decodiergeräten 5, beispielsweise Fernsehempfänger, sendet. Jedes Decodiergerät 5 umfasst einen Empfangsteil 2, beispielsweise einen Fernsehtuner, ein Modem, usw. Die vom Empfangsteil 2 empfangenen Daten x werden in einem Bufferspeicher 3 abgelegt und von einem Decodierungsmodul 4 decodiert. Das Decodierungsmodul 4 decodiert die Daten x (beispielsweise indem Bildzeilen und/oder digitale Blocks permutiert und/oder logisch kombiniert werden) und bildet auf diese Weise ein decodiertes Bild y, das durch Wiedergabemittel 8 wiedergegeben wird. Die Permutations- und Kombinationsregeln werden durch einen geheimen Decodierungsschlüssel K definiert, der von einem Schlüsselgenerator 6 erzeugt wird. Im einfachsten Fall wird der Decodierungsschlüssel K im Decodierungsmodul 4 festgelegt und kann somit nicht geändert werden.

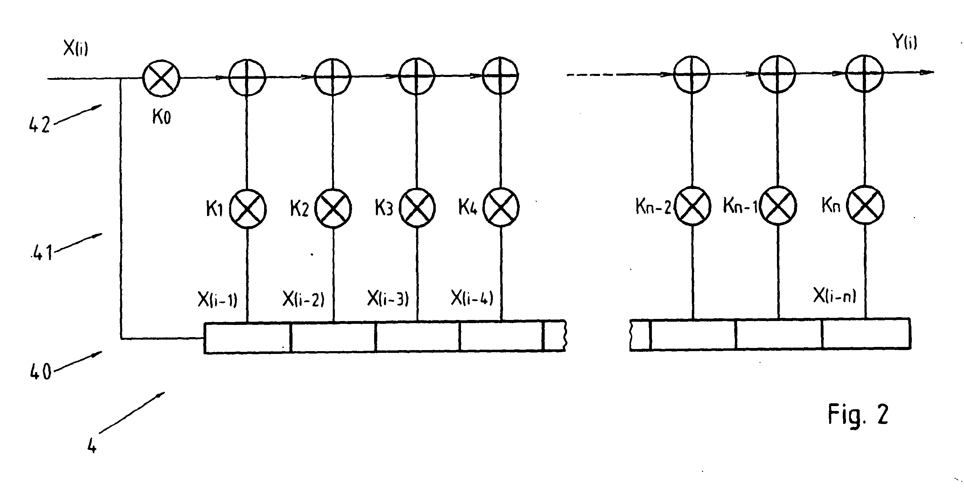

Die Figur 2 zeigt ein Beispiel eines digitalen Decodierungsmoduls 4, hier eines Descramblers. Das Decodierungsmodul 4 umfasst in diesem Beispiel ein Schieberegister 40 mit einer Vielzahl von Zellen, in welchen beispielsweise folgende Bits, Bytes, Bytesgruppen (entsprechen beispielsweise einer Fernsehsignalzeile oder einem Bildblock) des kodierten Signals x(i) gespeichert sind. Jede Zelle des Schieberegisters 40 ist mit einer UND-Schaltung 41 verbunden, deren zweiter Eingang mit einem Element (beispielsweise einem Bit) eines Decodierungsschlüssels K={kₙkₙ₋₁kₙ₋₂..k₁k₀) verbunden ist. Der Ausgang jeder UND-Schaltung 41 wird an eine XOR-Schaltung 42 geleitet, deren zweiter Eingang mit dem Ausgang der vorhergehenden XOR-Schaltung 42 verbunden ist. Die erste Zelle des Schiebenregisters 40 und die erste XOR-Schaltung 42 sind mit dem codierten Signal x(i) verbunden. Die letzte XOR-Schaltung 42 gibt das decodierte Signal y(i) an.

Dieses Decodierungsmodul 4 kann mit dem Decodierungsschlüssel K={kₙkₙ₋₁kₙ₋₂..k₁kₒ) ein mit dem Polynom kₙxⁿ+kₙ₋₁xⁿ⁻¹+kₙ₋₂xⁿ⁻²+..+k₁x+k₀ codiertes Signal x decodieren und das decodierte Signal y erzeugen.

Es wurde keine standardisierte Architektur für Decodiergeräte und für Decodierungsmodule definiert. Insbesondere die Länge des Decodierungsschlüssels K bzw. des Schiebenregisters 40 und das Format der digitalen Blocks in den Zellen des Schieberegisters sind vom Sendesystem und sogar vom Sender abhängig. In vielen Sendesystemen werden komplexere Decodierungsmodule mit einer anderen Architektur verwendet, beispielsweise Decodierungsmodule, die mehrere Schiebenregister einsetzen oder es werden andere logischen Schaltungen und komplexere Decodierungsalgorithmen benutzt. Jeder Sender 1 wählt somit ein Decodierungssystem, mit welchem seine Sicherheitsanforderungen erfüllt werden können.

Dies hat allerdings für den Benutzer des Empfängers 5 den Nachteil, das er im Allgemeinen mehrere Decodiergeräte 5 erwerben muss, wenn er Daten von mehreren Sendern (beispielsweise Fernsehsendern) die unterschiedliche Codierungsalgorithmen einsetzen (beispielsweise verschiedene Anordnungen von Schiebenregistern und logischen Schaltungen), empfangen will.

Ausserdem kann ein Sender den verwendeten Codierungsalgorithmus nicht auswechseln, ohne den ganzen Park von den an die Endbenutzer verteilten Empfangsgeräten zu ersetzen. Wenn der eingesetzte Codierungsalgorithmus die gewünschten Sicherheitsanforderungen nicht mehr erfüllt, kann er somit nur mit viel Aufwand ersetzt werden.

Der vom Decodierungsmodul 4 verwendete Decodierungsschlüssel K kann beispielsweise vom Sender 1 festgelegt und im Decodiergerät abgelegt werden. Dies hat allerdings den Nachteil, dass jeder, der den Decodierungsschlüssel K gefunden hat, diesen für unbegrenzte Zeit weiterverwenden kann, um empfangene Daten zu decodieren.

Es ist bereits bekannt, dass dieses Problem vermieden werden kann, wenn der Schlüssel periodisch ersetzt wird. In diesem Fall muss der Sender einen neuen Schlüssel K festlegen und durch einen geeigneten gesicherten Kanal an das Decodiergerät 5 übertragen.

WO-A1-94/08408 beschreibt zum Beispiel eine Kommunikationseinrichtung mit einer zentralen Station, die, wenn gewisse Bedingungen erfüllt sind, Descramblingschlüssel durch einen Funknetz an mobilen Decodern sendet. Dieses Dokument bringt aber keine Lösung zur Problematik der Erfindung.

EP-A1-0 626 793 beschreibt einen Decoder für Fernsehbilder mit zwei Prozessoren. Ein erster Prozessor macht das Descrambling der Daten mit einem Schlüssel, welcher verschlüsselt vom Sender gesendet wird und von einem zweiten Prozessor in einer Chipkarte entschlüsselt wird. Diese Lösung hat allerdings den Nachteil, dass für das Descrambling von animierten Bilddaten mit einer hohen Auflösung sehr schnelle Prozessoren (beispielsweise DSP) verlangt werden. Solche Prozessoren sind teuer und verbrauchen viel Strom, so dass sie nicht dazu geeignet sind in tragbare Endgeräte (beispielsweise in Chipkarten) integriert zu werden.

WO-A1-90/10354 beschreibt einen Decoder, in welchem eine Tabelle von Decodierungsschlüsseln durch einen Zufallsgenerator erzeugt wird. Der Zufallsgenerator wird mit einem vom Sender festgelegten geheimen Initialisierungswert KINI initialisiert, um die richtige Tabelle zu erzeugen.

EP-A2-0 723 373 beschreibt einen mit einem Generator von Pseudorauschen (pseudo-noise, PN) ausgerüsteten Decoder, wobei die codierten Signale anhand des PN-Signal decodiert werden. In einer Variante hängt das generierte PN-Signal von einem Descramblingsschlüssel und einer Konversionslogik ab, die beliebig parametriert werden können. Der Decodierungsalgorithmus selber bleibt aber immer gleich.

Die Sicherheit, die von solchen bekannten Systemen gewährleistet wird, in welchen die Struktur des Decodierungsmoduls 4 bekannt ist und in welchen nur der Descrablingsschlüssel geheim ist, ist nur so gut wie die Sicherheit, die vom Decodierungsschlüssel gewährleistet wird. Jeder, der eine Möglichkeit kennt, um den Decodierungsschlüssel herauszufinden (beispielsweise durch Abhorchen der Schlüssel während der Übertragung oder durch Test von allen möglichen Schlüsseln) kann auch die empfangenen Daten decodieren.

### Zusammenfassung der Erfindung

Ein Ziel der Erfindung ist es, ein neues Decodiergerät und ein neues Decodierungsverfahren anzubieten, die eine sicherere Codierung erlauben.

Ein anderes Ziel ist es, ein neues Decodiergerät und ein neues Decodierungsverfahren anzubieten, die an verschiedene Codierungsalgorithmen angepasst werden können.

Ein anderes Ziel ist es, ein neues leistungsfähiges Decodiergerät und Decodierungsverfahren anzubieten, mit welchen auch schnelle Datenflüsse decodiert werden können.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele durch ein Decodiergerät und durch ein Decodierungsverfahren erreicht, in welchen eine programmierbare FPGA-Schaltung verwendet wird und in welchen die Decodierung der Bilddaten von der Programmierung dieser FPGA-Schaltung abhängig ist.

FPGA-Schaltungen (Field Programmable Gate Arrays) bestehen aus mehreren Logikblocks innerhalb eines einzigen IC's, deren Anordnung und Verbindungen durch den Inhalt eines Speichers bestimmt wird. Die Funktionalität einer FPGA-Schaltung kann sehr schnell geändert werden indem neue Daten in den FPGA-Speicher geschrieben werden.

Verschiedene Schaltungen mit FPGA sind unter anderem in in der Gruppe H03K-19/177 der internationalen Patentklassifikation klassifizierten Patentschriften beschrieben. Demzufolge werden wir diese Schaltungen nicht mehr im Detail beschreiben.

Das erfindungsgemässe Decodiergerät hat den Vorteil, dass es an einen neuen Decodierungsalgorithmus angepasst werden kann, indem in den FPGA-Speicher geschrieben wird. Diese neuen Daten können beispielsweise vom Sender über verschiedene mögliche Kanäle übertragen werden. Dies hat den Vorteil, dass ein Sender den Decodierungsalgorithmus sehr einfach bei allen Decodiergeräten ersetzen kann, indem er neue Daten zur Programmierung der FPGA-Schaltung aussendet. Der Decodierungsalgorithmus kann sogar mehrmals innerhalb einer Sendung oder während der Übertragung einer einzigen Seite verändert werden.

Vorteilhaft ist die Möglichkeit, Daten zur Programmierung der FPGA-Schaltung durch einen anderen Übertragungskanal und/oder zu einer anderen Zeit als den Decodierungsschlüssel zu übertragen. Daten zur Programmierung der FPGA-Schaltung können somit beispielsweise als eine Art Berechtigungstoken in Chipkarten, in Applets, usw. vertrieben werden, die von den Endbenutzern erworben werden müssen und die erst dann verwendet werden können, wenn der passende Decodierungsschlüssel bekannt ist.

### Kurze Beschreibung der Erfindung

Im Folgenden werden anhand der beigefügten Zeichnungen bevorzugte Ausführungsbeispiele der Erfindung näher beschrieben, wobei
- Fig. 1: schematisch ein System mit einem bekannten Decodiergerät 5 zeigt,
- Fig. 2: schematisch ein Decodierungsmodul zeigt,
- Fig. 3: schematisch ein System mit einem Decodiergerät zeigt und
- Fig. 4: schematisch ein System mit einem Decodiergerät gemäss der Erfindung zeigt.

### Wege zur Ausführung der Erfindung

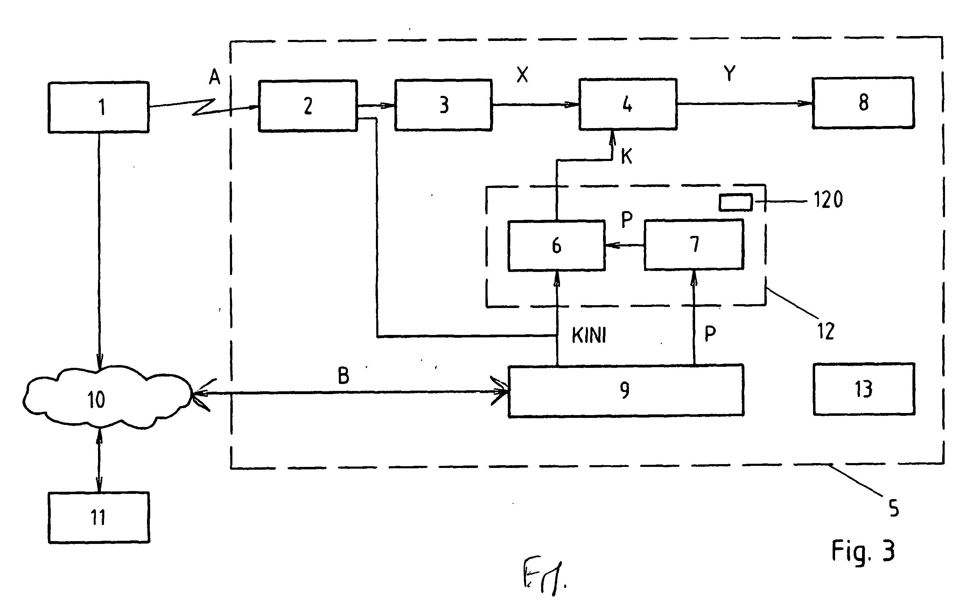

Die Figur 3 illustriert die Architektur eines Systems mit einem Decodiergerät. In diesem Beispiel umfasst das System einen Sender 1, vorzugsweise einen Sender der Daten im Broadcastmodus sendet. Der Sender 1 umfasst ein nicht dargestelltes Codierungsgerät, um mindestens einen Teil der ausgesendeten Daten zu decodieren, damit nur berechtigte Empfänger, (welche über den passenden Decodierungsschlüssel verfügen) diese Daten in einer erkennbaren Form wiedergeben können.

Der Sender 1 kann beispielsweise aus einem DAB oder DVB (Digital Audio Broadcasting bzw. Digital Video Broadcasting) Sender bestehen. Andere Sendeverfahren und Protokolle, beispielsweise mit ADSL, UMTS (Universal Mobile Telephone System), PLC (Power Communication Line), FFTH (Fiber to the Home) oder andere optische Verfahren können im Rahmen dieser Erfindung auch eingesetzt werden.

Die vom Sender 1 durch den Übertragungskanal A ausgesendeten Daten werden von einem oder mehreren Empfängern 5 empfangen. In dieser Ausführungsvariante enthält der Empfänger 5 einen Empfangsteil 2, beispielsweise einen DAB, DVB, ADSL, UMTS oder PLC-Empfänger, der die empfangenen Daten (beispielsweise Bildsequenzen, Internet-Seiten, WAP-Karten, DAB-begleitende Daten, usw.) empfängt und in ein geeignetes digitales Format umwandelt. Umwandelte digitale Daten x werden dann in einem Buffer 3 abgelegt.

Das erfindungsgemässe Decodiergerät 5 umfasst ein Decodierungsmodul 4 (beispielsweise einen Descrambler gemäss Figur 2) der einen Decodierungsschlüssel K verwendet, um codierte Daten x in decodierten Daten y umzuwandeln, die von den Wiedergabemitteln 8 wiedergegeben werden können.

In dieser ersten Variante wird der Decodierungsschlüssel K von einem Schlüsselgenerator 6 erzeugt, der eine FPGA-Schaltung umfasst. Die Architektur des Schlüsselgenerators 6, das heisst die Zusammenschaltung der logischen Komponenten in der FPGA-Schaltung, wird durch einen überschreibaren FPGA-Speicher 7 definiert, beispielsweise ein RAM oder ein ROM oder EEPROM in einem ersetzbaren Modul (beispielsweise in einer entfernbaren Chipkarte).

In dieser Variante ermittelt der Schlüsselgenerator 6 den Decodierungsschlüssel K auf Basis eines vom Sender 1 übermittelten Wertes KINI, wie später erläutert. Der Schlüsselgenerator 6 kann in einer ersten möglichen Variante aus einem Zufallgenerator bestehen, welcher eine Serie von Schlüsseln erzeugt, wobei die Serie vom Initialisierungswert KINI und von der Struktur des Zufallgenerators abhängig ist. Der Sender 1 (oder der Benutzer des Decodiergerätes 5) kann somit unterschiedliche Serien von Decodierungsschlüsseln erzeugen, indem am Eingang des Schlüsselgenerators 6 ein neuer Wert KINI vorgelegt wird und/oder indem der Inhalt P des FPGA-Speichers 7 neu programmiert wird. In einer anderen Variante besteht der Schlüsselgenerator 6 aus einem Decoder, der die vom Sender 1 ausgesendeten verschlüsselten Schlüsseldaten entschlüsseln kann, um den Decodierungsschlüssel zu rekonstruieren. Der Decoder kann beispielsweise einen asymmetrischen Decodierungsalgorithmus verwenden (beispielsweise gemäss RSA, ECC, EI-Garnal, DSA, ESIGN, usw.).

Ein unberechtigter Benutzer, welcher nur den Initialisierungswert KINI kennt, jedoch nicht den Inhalt P des FPGA-Speichers 7, kann somit die erzeugte Serie von Decodierungsschlüsseln nicht rekonstruieren. Umgekehrt genügt die Kenntnis des Inhalts P des FPGA-Speichers 7 nicht, um empfangenen Daten x zu decodieren, wenn der Initialisierungswert KINI nicht bekannt ist.

Der Empfänger 5 umfasst vorteilhafterweise ein zweites Empfangsteil 9 für ein zweites Kommunikationsnetz 10 (beispielsweise einen GSM oder UMTS-Mobilfunkteil, ein PLC-Endgerät, ein Internet-Client, usw.). Daten vom Sender 1, unter anderem der Initialisierungswert KINI und/oder der Inhalt P des Speichers 7, können vorzugsweise über einen Übertragungskanal B durch dieses zweite Kommunikationsnetz 10 an den Empfänger 5 übertragen werden (beispielsweise als Applet, als MEXE-Programm, als WAP-Applikation, usw.). Diese Daten können beispielsweise aus einem Server, beispielsweise aus einem WAP-Server (Wireless Application Protocol) oder einem http-Server, im Kommunikationsnetz 10 ferngeladen werden, beispielsweise gegen Bezahlung durch bekannte elektronische Geldtransaktionsverfahren (beispielsweise mit dem in der Patentanmeldung WO-A1-98/28900 beschriebenen Flexmart-Verfahren).

Der Initialisierungswert KINI und/oder der Inhalt des FPGA-Speichers 7 können als Variante auch über denselben Übertragungskanal A wie die codierten Daten übertragen werden, beispielsweise als entschlüsselte programmbegleitende oder nicht programmbegleitende Daten (PAD bzw NPAD) eines DAB beziehungsweise DVB-Senders.

Als weitere Variante können der Initialisierungswert KINI und/oder der Inhalt P des FPGA-Speichers 7 vom Sender 1 auch in Chipkarten 12 kopiert werden, die beispielsweise an alle berechtigten Abonnenten vertrieben werden oder die in Kiosks, Geschäften, usw., käuflich erworben werden können. Es können beispielsweise Chipkarten 12 erworben werden, die den Inhaber berechtigen, Daten eines bestimmten Senders 1, einer bestimmten Sendung, eines bestimmten Tagesprogramms oder während einer bestimmten Dauer wiederzugeben.

Vorteilhaft ist die Möglichkeit, den Initialisierungswert KINI und den Inhalt des Speichers P durch zwei unterschiedliche Kanäle zu übertragen, um zu vermeiden, dass ein Abhorcher, der nur KINI oder nur P herausfindet, unberechtigt Daten decodieren kann. Diese beiden Daten KINI und P können ausserdem zu unterschiedlichen Zeiten aktualisiert werden (beispielsweise kann der Wert KINI mehrmals während jeder Sendung durch den Übertragungskanal A oder B und der Inhalt des FPGA-Speichers 7 durch Erwerben einer neuen Chipkarte 12 ersetzt werden).

Damit eröffnet sich auch die Möglichkeit, den Initialisierungswert KINI oder den Inhalt des Speichers P als Berechtigungstoken zu verwenden, um den Zugriff auf bestimmte Sender, auf bestimmte Sendungen oder auf bestimmte Daten zu erlauben. Solche Berechtigungstoken können beispielsweise durch verschiedene Kanäle vermarktet werden; eine Decodierung ist jedoch erst dann möglich, wenn der Benutzer auch den passenden anderen Wert (KINI beziehungsweise P) kennt, der beispielsweise bei allen Abonnenten automatisch ersetzt wird.

Der Schlüsselgenerator 6 und/oder der FPGA-Speicher 7 können sich in einer austauschbaren Chipkarte 12 befinden, beispielsweise in einer Chipkarte im ISO-Format. Der Fachmann wird verstehen, dass auch andere Komponenten des Empfängers 5 in der Chipkarte 12 integriert werden können, unter anderem auch das Decodierungsmodul 4. Die Chipkarte kommuniziert mit dem Empfänger 5 durch eine vorzugsweise standardisierte API-Schnittstelle. Die Chipkarte 12 ist vorzugsweise eine JavaCard (Warenzeichen von Sun Corporation), die Java-Applets (Warenzeichen von Sun Corporation) durchführen kann.

Damit eröffnet sich die Möglichkeit, den Schlüsselgenerator 6 ganz einfach an einen anderen Sender 1 oder an eine bestimmte Sendung anzupassen, indem die Chipkarte 12 ersetzt wird.

Es können auch mehrere Sets von FPGA-Speicherinhalten im Decodiergerät 5 abgelegt werden, wobei das passende Set automatisch selektiert wird, wenn der Benutzer einen anderen Sendekanal oder eine bestimmte Sendung auswählt. FPGA-Speicherinhalte können in diesem Fall wie Plug-In-Module verwendet werden, wobei jedes Plug-In Modul den Zugriff auf bestimmte Daten erlaubt.

Die Chipkarte 12 umfasst ausserdem vorzugsweise einen Speicherbereich 120 mit einer Identifizierung des Benutzers, beispielsweise eine IMSI (International Mobile Subscriber Identity), die auch vom zweiten Empfangsteil 9 verwendet werden kann, um den Benutzer des Empfängers 5 im Mobilfunknetz 10 zu identifizieren. Diese Identifizierung kann auch von einem Verrechnungszentrum 11 welches durch das zweite Kommunikationsnetz 10 erreicht werden kann verwendet werden, um dem Benutzer die Wiedergabe der Daten oder das Fernladen der Berechtigungstoken zu verrechnen. Der verrechnete Betrag kann beispielsweise monatlich mit der Telefon-Rechnung verrechnet werden, wenn das Verrechnungszentrum vom Betreiber des Kommunikationsnetzes 10 verwaltet wird, oder durch bekannte Mechanismen einem vorbezahlten Konto in der Chipkarte 12 belastet werden.

Der verrechnete Betrag kann vorzugsweise von der Dauer der Datenwiedergabe und/oder von den wiedergegebenen Daten abhängig sein. Von Daten abhängige Beträge können beispielsweise als programmbegleitende Daten in einem DAB- oder DVB-Programm angegeben werden. Die Wiedergabedauer kann beispielsweise von einem Zeitmodul 13 im Empfänger 5 ermittelt werden. In einer bevorzugten Variante wird das Zeitmodul in die Chipkarte 12 integriert, wie in der Patentanmeldung WO-A1-99/25111 beschrieben.

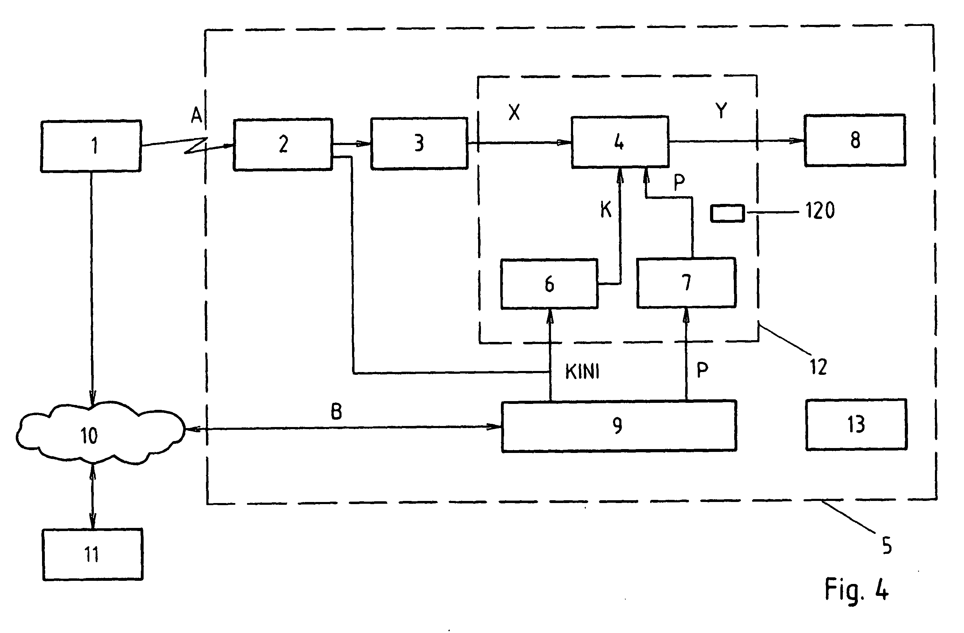

Nachfolgend wird die Erfindung anhand der Figur 4 beschrieben. Gleiche oder entsprechende Merkmale werden mit den gleichen Bezugszeichen auf allen Figuren gekennzeichnet und nur wenn nötig neu beschrieben.

Das erfindungsgemässe Decodiergerät 5 umfasst ein Decodierungsmodul 4, das eine FPGA-Schaltung umfasst oder das aus einer FPGA-Schaltung besteht. Die Architektur des Decodierungsmoduls 4, das heisst die Zusammenschaltung der logischen Komponenten in der FPGA-Schaltung, wird durch einen überschreibaren FPGA-Speicher 7 definiert, beispielsweise ein RAM, ROM oder EEPROM in einem ersetzbaren Modul, beispielsweise in einer entfernbaren Chipkarte 12.

Das Decodierungsmodul 4 verwendet einen vom Schlüsselgenerator 6 ermittelten Decodierungsschlüssel K, um codierte Daten x in decodierte Daten y umzuwandeln, die von den Wiedergabemitteln 8 wiedergegeben werden können. Der Schlüsselgenerator 6 ermittelt den Decodierungsschlüssel K auf Basis eines vom Sender 1 übermittelten Wertes KINI, wie später erläutert. Wie in der ersten Variante kann der Schlüsselgenerator 6 beispielsweise aus einem Zufallsgenerator oder aus einem Decoder, der vom Sender 1 ausgesendeten verschlüsselten Schlüsseldaten entschlüsseln kann, bestehen, um den Decodierungsschlüssel zu rekonstruieren. Im einfachsten Fall ist der Decodierungsschlüssel K oder der Initialisierungswert KINI im Decodierungsmodul 4 festgelegt und muss nicht separat übertragen werden. In einer anderen Variante besteht der Decodierungsschlüssel aus einem einfachen Speicherbereich, in welchen der Schlüssel kopiert wird.

Diese Variante erlaubt es, das ganze Decodierungsmodul 4 neu zu programmieren, indem im FPGA-Speicher 7 neue Daten erfasst werden. Dadurch kann das Decodiergerät 5 sehr schnell und ohne viel Aufwand an verschiedene Sender oder Sendungen angepasst werden.

Ausserdem können mit dieser Variante sehr komplexe wiederprogrammierbare Decodierungsmodule 4 hergestellt werden, die völlig neu programmiert werden können und die beispielsweise mehrere Bits parallel bearbeiten können, beispielsweise Wörter von 512 Bits oder mehr. Auf diese Weise können die vom Empfangsteil 2 zur Verfügung gestellten Daten in Echtzeit bearbeitet werden, ohne vorher in den Bufferspeicher 3 gespeichert zu werden. Es ist somit möglich, auf den Bufferspeicher 3 ganz zu verzichten, oder dessen Grösse stark zu reduzieren.

Ausserdem können sehr komplexe Strukturänderungen des Decodierungsmoduls 4 durchgeführt werden, mit welchen strukturell völlig verschiedene Decodierungsmodule 4 programmiert werden können. Mit derselben FPGA-Schaltung können beispielsweise Decodierungsmodule programmiert werden, die ganze Zeilen bewegen, oder andere Decodierungsmodule, die einzelne Bits oder Bytes decodieren oder verschieben.

Das Decodierungsmodul 4, der Schlüsselgenerator 6 und/oder der FPGA-Speicher 7 können sich in einer austauschbaren Chipkarte 12 befinden, beispielsweise in einer Chipkarte im ISO-Format. Der Fachmann wird verstehen, dass auch andere Komponenten des Empfängers 5 in die Chipkarte 12 integriert werden können. Die Chipkarte kommuniziert mit dem Empfänger 5 durch eine vorzugsweise standardisierte API-Schnittstelle. Die Chipkarte ist vorzugsweise eine JavaCard (Warenzeichen von Sun Corporation), welche Java-Applets (Warenzeichen von Sun Corporation) durchführen kann.

Wie in der ersten Variante können der Inhalt des FPGA und der Initialisierungswert KINI unabhängig voneinander und durch verschiedene Übertragungskanäle vom Sender 1 geändert werden. Es ist auch möglich, einen Wert (beispielsweise der Initialisierungswert KINI) periodisch automatisch zu aktualisieren während der andere Wert, beispielsweise der FPGA-Inhalt, als Berechtigungstoken in Chipkarten oder in Applets erworben muss, um auf bestimmte Daten oder bestimmte Sender zugreifen zu können.

In beiden Varianten können ausserdem zeitabhängige Berechtigungstoken P und/oder KINI verwendet werden, die beispielsweise nur während einer bestimmten Dauer gültig sind, oder erst bei gewissen Tageszeiten oder Wochentagen. Diese Erfindung erlaubt es ausserdem, unterschiedliche Qualitäten von Berechtigungen zu erteilen. Beispielsweise können "gute" FPGA-Inhalte verkauft werden, die eine optimale Decodierung und eine gute Wiedergabe der Daten ermöglichen und für einen tieferen Preis "schlechtere" FPGA-Inhalte, die das Decodierungsmodul nicht optimal programmieren, so dass die Qualität beispielsweise nur für kleinere Anzeigen oder nur für die Archivierung oder Indexierung der Daten ausreichend ist.

Es ist auch möglich, Berechtigungstoken zu verteilen, die nur die Decodierung von bestimmten Bildteilen erlauben, beispielsweise nur die Decodierung von bestimmten Fenstern in einem System mit einer graphischen Benutzeroberfläche (GUI), oder nur die Decodierung der während der Zeilenabtastdauer eines Fernsehprogramms übertragenen Daten.

## Patentansprüche

1. Decodiergerät (5) mit einem Decodierungsmodul (4), um digitale codierte Bilddaten eines Broadcastsenders (1), die mit einem ersten Empfangstell (2) empfangen werden, zu decodieren, wobei das Decodierungsmodul (4) einen Decodierungsschlüssel (K) verwendet, um codierte Daten in decodierte Daten umzuwandeln,
wobei das benannte Decodierungsmodul (4) eine programmierbare FPGA-Schaltung mit einer Vielzahl von Logikblocks enthält, deren Zusammenschaltung durch Änderung eines FPGA-Speichers (7) geändert werden kann, wobei die Decodierung der benannten Bilddaten von der Programmierung dieser FPGA-Schaltung abhängig ist, und wobei der FPGA-Speicher (7) sich in einer Chipkarte (12) befindet, **dadurch gekennzeichnet, dass** sich das benannte Decodierungsmodul (4) in der Chipkarte (12) befindet und das Decodiergerät (5) ein zweites Empfangsteil (9) für ein Mobilfunknetz (10) umfasst, so dass der benannte FPGA-Speicher (7) über das Mobilfunknetz (10) aktualisiert werden kann.

2. Decodiergerät (5) gemäss einem der vorhergehende Ansprüche, **dadurch gekennzeichnet, dass** das benannte Decodierungsmodul (4) einen Decodierungsschlüssel (K) verwendet, der mit einer programmierbaren FPGA-Schaltung (6) ermittelt wird.

3. Decodiergerät (5) gemäss dem vorhergehenden Anspruch, **dadurch gekennzeichnet, dass** der benannte Decodierungsschlüssel (K) mit einem mit einer programmierbaren FPGA-Schaltung ausgeführten Zufallsgenerator (6) ermittelt wird.

4. Decodiergerät (5) gemäss dem vorhergehenden Anspruch, **dadurch gekennzeichnet, dass** der benannte Zufallsgenerator (6) einen Initialisierungswert (KINI) verwendet, welcher in der Chipkarte (12) abgelegt ist.

5. Decodiergerät (5) gemäss einem der Ansprüche 3 oder 4, **dadurch gekennzeichnet, dass** der benannte Zufallsgenerator (6) einen Initialisierungswert (KINI) verwendet, welcher über ein Mobilfunknetz (10) an das benannte Decodiergerät (5) übermittelt wird.

6. Decodiergerät (5) gemäss einem der Ansprüche 3 oder 4, **dadurch gekennzeichnet, dass** der benannte Zufallsgenerator (4) einen Initialisierungswert (KINI) verwendet, welcher verschlüsselt über einen Broadcastkanal übertragen wird und in der Chipkarte (12) im benannten Decodiergerät entschlüsselt wird.

7. Decodiergerät (5) gemäss dem vorhergehenden Anspruch, **dadurch gekennzeichnet, dass** die benannte Chipkarte (12) eine FPGA-Schaltung (6) zur Entschlüsselung des benannten Initialisierungswerts (KINI) umfasst.

8. Decodiergerät (5) gemäss dem Anspruch 2, **dadurch gekennzeichnet, dass** der benannte Decodierungsschlüssel (K) in der Chipkarte (12) abgelegt ist.

9. Decodiergerät (5) gemäss dem Anspruch 2, **dadurch gekennzeichnet, dass** der benannte Decodierungsschlüssel (K) über das Mobilfunknetz (10) an das benannte Decodiergerät übermittelt wird.

10. Decodiergerät (5) gemäss dem Anspruch 2, **dadurch gekennzeichnet, dass** der benannte Decodierungsschlüssel (K) verschlüsselt über einen Broadcastkanal übertragen wird und in der Chipkarte (12) in dem benannten Decodiergerät (5) entschlüsselt wird.

11. Decodiergerät (5) gemäss dem vorhergehenden Anspruch, **dadurch gekennzeichnet, dass** die benannte Chipkarte (12) eine FPGA-Schaltung zur Entschlüsselung des benannten Decodierungsschlüssels (K) umfasst.

12. Decodiergerät (5) gemäss einem der vorhergehenden Ansprüche, **dadurch gekennzeichnet, dass** es einen DAB oder DVB-Empfänger (2) umfasst, um die benannten animierten Bilddaten zu empfangen.

13. Decodiergerät (5) gemäss einem der Ansprüche 1 bis 11, **dadurch gekennzeichnet, dass** es einen PLC-Empfänger (2) umfasst, um die benannten animierten Bilddaten zu empfangen.

14. Decodiergerät (5) gemäss einem der Ansprüche 1 bis 11, **dadurch gekennzeichnet, dass** es einen ADSL-Empfänger (2) umfasst, um die benannten animierten Bilddaten zu empfangen.

15. Decodiergerät (5) gemäss einem der Ansprüche 1 bis 11, **dadurch gekennzeichnet, dass** es einen UMTS-Empfänger (2) umfasst, um die benannten animierten Bilddaten zu empfangen.

16. Decodiergerät (5) gemäss einem der Ansprüche 1 bis 15, **dadurch gekennzeichnet, dass** es ein Identifizierungsmodul (12) umfasst, in welchem die Identität (120) des Benutzers abgelegt ist, um den Benutzer im Mobilfunknetz (10) zu identifizieren.

17. Verfahren, um codierte animierte Bilddaten eines Broadcastsenders (1) mit einem Decodiergerät (5), das ein erstes Empfangsteil (2) für den Broadcastsender (1) und ein Decodierungsmodul (4) umfasst, zu decodieren, wobei das Decodierungsmodul (4) einen Decodierungsschlüssel (K) verwendet, um codierte Daten in decodierte Daten umzuwandeln,
mit folgenden Schritten:
- die benannten Bilddaten werden anhand des Decodierungsmoduls (4), das als FPGA-Schaltung mit einer Vielzahl von Logikblocks ausgeführt wird, entschlüsselt, deren Zusammenschaltung durch Änderung eines sich auf einer Chipkarte (12) befindenden FPGA-Speichers (7) geändert werden kann,
- Decodierung der benannten Bilddaten anhand der benannten FPGA-Schaltung
**dadurch gekennzeichnet, dass** sich das benannte Decodierungsmodul (4) in der Chipkarte (12) befindet und das Decodiergerät (5) ein zweites Empfangsteil (9) für ein Mobilfunknetz (10) umfasst, und der benannte FPGA-Speicher (7) über das Mobilfunknetz (10) aktualisiert wird.

18. Verfahren gemäss Anspruch 17, **dadurch gekennzeichnet, dass** die benannten Bilddaten anhand eines Decodierungsschlüssels (K) entschlüsselt werden, der mit einer programmierbaren FPGA-Schaltung (6) ermittelt wird.

19. Verfahren gemäss dem vorhergehenden Anspruch, **dadurch gekennzeichnet, dass** der benannte Decodierungsschlüssel (K) mit einem durch eine programmierbare FPGA-Schaltung hergestellten Zufallsgenerator (6) ermittelt wird.

20. Verfahren gemäss dem vorhergehenden Anspruch, **dadurch gekennzeichnet, dass** der benannte Zufallsgenerator (6) einen Initialisierungswert (KINI) verwendet, welcher per Chipkarte (12) vertrieben wird.

21. Verfahren gemäss einem der Ansprüche 18 oder 20, **dadurch gekennzeichnet, dass** der benannte Zufallsgenerator (6) einen Initialisierungswert (KINI) verwendet, welcher über das Mobilfunknetz (10) an das benannte Decodiergerät (5) übermittelt wird.

22. Verfahren gemäss einem der Ansprüche 18 oder 20, **dadurch gekennzeichnet, dass** der benannte Zufallsgenerator (4) einen Initialisierungswert (KINI) verwendet, welcher verschlüsselt über einen Broadcastkanal übertragen wird und in der Chipkarte (12) im benannten Decodiergerät (5) entschlüsselt wird.

23. Verfahren gemäss dem Anspruch 20, **dadurch gekennzeichnet, dass** der benannte Decodierungsschlüssel (K) über das Mobilfunknetz (10) an das benannte Decodiergerät (5) übermittelt wird.

24. Verfahren gemäss dem Anspruch 18, **dadurch gekennzeichnet, dass** der benannte Decodierungsschlüssel (K) verschlüsselt über einen Broadcastkanal übertragen wird und in der Chipkarte (12) im benannten Decodiergerät (5) entschlüsselt wird.

25. Verfahren gemäss einem der Ansprüche 17 bis 24, **dadurch gekennzeichnet, dass** die benannten Bilddaten über einen DAB oder DVB-Übertragungskanal übertragen werden.

26. Verfahren gemäss einem der Ansprüche 17 bis 24, **dadurch gekennzeichnet, dass** die benannten Bilddaten über einen PLC-Übertragungskanal übertragen werden.

27. Verfahren gemäss einem der Ansprüche 17 bis 24, **dadurch gekennzeichnet, dass** die benannten Bilddaten über einen ADSL-Übertragungskanal übertragen werden.

28. Verfahren gemäss einem der Ansprüche 17 bis 24, **dadurch gekennzeichnet, dass** die benannten Bilddaten über einen UMTS-Übertragungskanal übertragen werden.

29. Verfahren gemäss einem der Ansprüche 17 bis 28, **dadurch gekennzeichnet, dass** die Identität des Benutzers (120) im Mobilfunknetz (10) anhand eines Identifizierungsmoduls (12) ermittelt wird..

30. Verfahren gemäss einem der Ansprüche 17 bis 29, **dadurch gekennzeichnet, dass** der Codierungsalgorithmus, der von einem bestimmten Broadcastsender (1) verwendet wird, mehrmals geändert wird und dass die benannte FPGA-Schaltung (4; 6) entsprechend mehrmals neu programmiert wird.

31. Verfahren gemäss dem vorhergehenden Anspruch, **dadurch gekennzeichnet, dass** der benannte Broadcastsender (1) die Erkennbarkeit verschiedener Sendungen durch Anpassung des benannten Codierungsalgorithmus ändert.

32. Chipkarte (12) zur Verwendung in einem Decodierungsgerät (5) gemäss einem der Ansprüche 1 bis 16, um digitale codierte Bilddaten eines Broadcastsenders (1) zu decodieren, **dadurch gekennzeichnet, dass** sie ein Decodierungsmodul (4) umfasst, das eine programmierbare FPGA-schaltung mit einer Vielzahl von Logikblocks enthält, deren Zusammenschaltung durch Änderung eines sich auf der Chipkarte (12) befindenden FPGA-Speichers (7) geändert werden kann, wobei die benannte FPGA-Schaltung zur Anpassung eines Algorithmus zur Decodierung von Bilddaten verwendet wird und wobei der benannte FPGA-Speicher (7) über ein Mobilfunknetz (10) aktualisiert werden kann.

33. Chipkarte (12) gemäss dem Anspruch 32, **dadurch gekennzeichnet, dass** die benannte FPGA-Schaltung ein Zufallsgenerator (6) ist.

34. Chipkarte (12) gemäss dem Anspruch 32, **dadurch gekennzeichnet, dass** die benannte FPGA-Schaltung die Ermittlung eines Initialisierungswertes (KINI) für einen Zufallsgenerator (6) erlaubt.

35. Chipkarte (12) gemäss einem der Ansprüche 32 bis 34, **dadurch gekennzeichnet, dass** sie ausserdem Benutzeridentifizierungsdaten (120) enthält, um den Benutzer im Mobilfunknetz (10) zu identifizieren.

## Claims

1. Decoding device (5) with a decoding module (4) to decode digitally encoded image data of a broadcast sender (1), which are received with a first receiving part (2), wherein the decoding module (4) uses a decoding key (K) to transform coded data into decoded data,
wherein said decoding module (4) comprises a programmable FPGA circuit with a plurality of logic blocs, whose interconnection can be modified by modifying the FPGA memory (7), wherein the decoding of said image data depends on the programming of this FPGA circuit and wherein said FPGA memory (7) is located in a chip-card (12), **characterized in that** said decoding module (4) is arranged in said chip card (12) and the decoding device (5) comprises a second receiving part (9) for a mobile radio network (10) so that said FPGA memory (7) can be updated over the mobile radio network (10).

2. Decoding device (5) according to one of the preceding claims, **characterized in that** said decoding module (4) uses a decoding key (K) that is determined with a programmable FPGA circuit (6).

3. Decoding device (5) according to the preceding claim, **characterized in that** said decoding key (K) is determined with a random generator (6) executed with a programmable FPGA circuit.

4. Decoding device (5) according to the preceding claim, **characterized in that** said random generator (6) uses an initialization value (KINI) stored in the chip-card (12).

5. Decoding device (5) according to one of the claims 3 or 4, **characterized in that** said random generator (6) uses an initialization value (KINI) that is transmitted over a mobile radio network (10) to said decoding device (5).

6. Decoding device (5) according to one of the claims 3 or 4, **characterized in that** said random generator (6) uses an initialization value (KINI) that is transmitted in encrypted form over a broadcast channel and that is decoded in the chip-card (12) in said decoding device.

7. Decoding device (5) according to the preceding claim, **characterized in that** said chip-card (12) comprises an FPGA circuit (6) for decoding said initialization value (KINI).

8. Decoding device (5) according to claim 2, **characterized in that** said decoding key (K) is stored in the chip-card (12).

9. Decoding device (5) according to claim 2, **characterized in that** said decoding key (K) is transmitted over the mobile radio network (10) to said decoding device.

10. Decoding device (5) according to claim 2, **characterized in that** said decoding key (K) is transmitted in encrypted form over a broadcast channel and is decoded in the chip-card (12) in said decoding device (5).

11. Decoding device (5) according to the preceding claim, **characterized in that** said chip-card (12) comprises an FPGA circuit for decoding said decoding key (K).

12. Decoding device (5) according to one of the preceding claims, **characterized in that** it comprises a DAB or DVB receiver (2) in order to receive said animated image data.

13. Decoding device (5) according to one of the claims 1 to 11, **characterized in that** it comprises a PLC receiver (2) in order to receive said animated image data.

14. Decoding device (5) according to one of the claims 1 to 11, **characterized in that** it comprises an ADSL receiver (2) in order to receive said animated image data.

15. Decoding device (5) according to one of the claims 1 to 11, **characterized in that** it comprises a UMTS receiver (2) in order to receive said animated image data.

16. Decoding device (5) according to one of the claims 1 to 15, **characterized in that** it comprises an identification module (12) in which the user's identity (120) is stored, to identifiy the user in the mobile radio network (10).

17. Method for decoding encoded animated image data of a broadcast sender (1) with a decoding device (5) that comprises a first receiving part (2) for the broadcast sender (1) and a decoding module (4), wherein the decoding module (4) uses a decoding key (K) to transform coded data into decoded data, including the following steps:
- said image data are decrypted on the basis of the decoding module (4) executed as FPGA circuit with a plurality of logic blocs, whose interconnection can be modified by modifying one of the FPGA memories (7), which is arranged in a chip card (12),
- decoding said image data on the basis of said FPGA circuit **characterized in that** said decoding module (4) is arranged in said chip card (12) and the decoding device (5) comprises a second receiving part (9) for a mobile radio network (10) so that said FPGA memory (7) is updated over the mobile radio network (10).

18. Method according claim 17, **characterized in that** said image data are decrypted on the basis of a decoding key (K) determined with a programmable FPGA circuit (21).

19. Method according to the preceding claim, **characterized in that** said decoding key (K) is determined with a random generator (6) determined with a programmable FPGA circuit.

20. Method according to the preceding claim, **characterized in that** said random generator (6) uses an initialization value (KINI) distributed per chip-card (12).

21. Method according to one of the claims 18 or 20, **characterized in that** said random generator (6) uses an initialization value (KINI) transmitted over the mobile radio network (10) to said decoding device (5).

22. Method according to one of the claims 18 or 20, **characterized in that** said random generator (4) uses an initialization value (KINI) transmitted in encrypted form over a broadcast channel and decrypted in der chip-card (12) in said decoding device (5).

23. Method according to claim 20, **characterized in that** said decoding key (K) is transmitted over the mobile radio network (10) to said decoding device (5).

24. Method according to claim 18, **characterized in that** said decoding key (K) is transmitted in encrypted form over a broadcast channel and decrypted in the chip-card (12) in said decoding device (5).

25. Method according to one of the claims 17 to 24, **characterized in that** said image data are transmitted over a DAB or DVB transmission channel.

26. Method according to one of the claims 17 to 24, **characterized in that** said image data are transmitted over a PLC transmission channel.

27. Method according to one of the claims 17 to 24, **characterized in that** said image data are transmitted over an ADSL transmission channel.

28. Method according to one of the claims 17 to 24, **characterized in that** said image data are transmitted over a UMTS transmission channel.

29. Method according to one of the claims 17 to 28, **characterized in that** the user's identity (120) in the mobile radio network (10) is determined on the basis of an identification module (12).

30. Method according to one of the claims 17 to 29, **characterized in that** the encoding algorithm used by a certain broadcast sender (1) is modified several times and **in that** said FPGA circuit (4; 6) is correspondingly reprogrammed several times.

31. Method according to the preceding claim, **characterized in that** said broadcast sender (1) modifies the recognizability of different programs by adapting said encoding algorithm.

32. Chip-card (12) for use in a decoding device (5) according to any of the claims 1 to 16, to decode digitally encoded image data of a broadcast sender (1), **characterized in that** it comprises a decoding module (4), that has a plurality of logic blocs, whose interconnection can be modified by modifying a FPGA memory (7), which is arranged on a chip card (12), wherein said FPGA circuit is used for adapting an algorithm for decoding image data and said FPGA memory (7) can be updated over the mobile radio network (10).

33. Chip-card (12) according to claim 32, **characterized in that** said FPGA circuit is a random generator (6).

34. Chip-card (12) according to claims 32, **characterized in that** said FPGA circuit allows an initialization value (KINI) for a random generator (6) to be determined.

35. Chip-card (12) according to one of the claims 32 to 34, **characterized in that** it additionally comprises user identification data (120) to identify the user in the radio mobile network (10).

## Revendications

1. Appareil de décodage (5) comportant un module de décodage (4) pour décoder des données d'image numérique codée d'un émetteur radio (1), qui sont reçues par un premier récepteur (2), selon lequel le module de décodage (4) utilise une clé de décodage (K) pour transformer les données codées en données décryptées,
selon lequel ledit module de décodage (4) comprend un circuit FPGA programmable avec plusieurs blocs logiques, dont l'interconnexion peut être modifiée en modifiant la mémoire FPGA (7), selon lequel le décodage desdites données d'image se fait en fonction de la programmation de ce circuit FPGA et selon lequel ladite mémoire FPGA (7) se trouve dans une carte à puce (12), **caractérisé en ce que** ledit module de décodage (4) se trouve dans ladite carte à puce (12) et l'appareil de décodage (5) comporte un second récepteur (9) pour un réseau de radiocommunication (10), de sorte que ladite mémoire FPGA (7) puisse être mise à jour au moyen du réseau de radiocommunication (10).

2. Appareil de décodage (5) selon l'une des précédentes revendications, **caractérisé en ce que** ledit module de décodage (4) utilise une clé de décodage (K) qui est générée par un circuit FPGA programmable (6).

3. Appareil de décodage (5) selon la revendication précédente, **caractérisé en ce que** ladite clé de décodage (K) est générée par un générateur aléatoire (6) exécuté par un circuit FPGA programmable.

4. Appareil de décodage (5) selon la revendication précédente, **caractérisé en ce que** ledit générateur aléatoire (6) utilise une valeur d'initialisation (KINI) stockée dans la carte à puce (12).

5. Appareil de décodage (5) selon l'une des revendications 3 ou 4, **caractérisé en ce que** ledit générateur aléatoire (6) utilise une valeur d'initialisation (KINI) qui est transmise au moyen d'un réseau de radiocommunication (10) audit appareil de décodage (5).

6. Appareil de décodage (5) selon l'une des revendications 3 ou 4, **caractérisé en ce que** ledit générateur aléatoire (6) utilise une valeur d'initialisation (KINI) qui est transmise dans un format encrypté par un canal radio et qui est décryptée dans la carte à puce (12) dans ledit appareil de décodage.

7. Appareil de décodage (5) selon la revendication précédente, **caractérisé en ce que** ladite carte à puce (12) comporte un circuit FPGA (6) pour décoder ladite valeur d'initialisation (KINI).

8. Appareil de décodage (5) selon la revendication 2, **caractérisé en ce que** ladite clé de décodage (K) est stockée dans la carte à puce (12).

9. Appareil de décodage (5) selon la revendication 2, **caractérisé en ce que** ladite clé de décodage (K) est transmise au moyen du réseau de radiocommunication (10) audit appareil de décodage.

10. Appareil de décodage (5) selon la revendication 2, **caractérisé en ce que** ladite clé de décodage (K) est transmise dans un format encrypté par un canal radio et est décryptée dans la carte à puce (12) dans ledit appareil de décodage (5).

11. Appareil de décodage (5) selon la revendication précédente, **caractérisé en ce que** ladite carte à puce (12) comporte un circuit FPGA pour décoder ladite clé de décodage (K).

12. Appareil de décodage (5) selon l'une des revendications précédentes, **caractérisé en ce qu'**il comporte un récepteur DAB ou DVB (2) de manière à recevoir lesdites données d'image animée.

13. Appareil de décodage (5) selon l'une des revendications 1 à 11, **caractérisé en ce qu'**il comporte un récepteur PLC (2) de manière à recevoir lesdites données d'image animée.

14. Appareil de décodage (5) selon l'une des revendications 1 à 11, **caractérisé en ce qu'**il comporte un récepteur ADSL (2) de manière à recevoir lesdites données d'image animée.

15. Appareil de décodage (5) selon l'une des revendications 1 à 11, **caractérisé en ce qu'**il comporte un récepteur UMTS (2) de manière à recevoir lesdites données d'image animée.

16. Appareil de décodage (5) selon l'une des revendications 1 à 15, **caractérisé en ce qu'**il comporte un module d'identification (12) dans lequel l'identité de l'utilisateur (120) est stockée pour identifier l'utilisateur dans le réseau de radiocommunication (10).

17. Méthode pour décoder des données d'image animée codée d'un émetteur radio (1) avec un appareil de décodage (5), qui comprend un premier récepteur (2) pour l'émetteur radio et un module de décodage (4), selon laquelle le module de décodage (4) utilise une clé de décodage (K) pour transformer les données codées en données décodées, comprenant les étapes suivantes:
- lesdites données d'image sont décryptées sur la base du module de décodage (4) exécuté tel un circuit FPGA avec plusieurs blocs logiques, dont l'interconnexion peut être modifiée en modifiant une mémoire FPGA (7) qui se trouve sur la carte à puce (12),
- décodage desdites données d'image sur la base dudit circuit FPGA **caractérisé en ce que** ledit module de décodage (4) se trouve dans ladite carte à puce (12) et l'appareil de décodage (5) comporte un second récepteur (9) pour un réseau de radiocommunication (10), de sorte que ladite mémoire FPGA (7) puisse être mise à jour au moyen du réseau de radiocommunication (10).

18. Méthode selon la revendication 17, **caractérisée en ce que** lesdites données d'image sont décryptées sur la base d'une clé de décodage (K) générée par un circuit FPGA programmable (21).

19. Méthode selon la revendication précédente, **caractérisée en ce que** ladite clé de décodage (K) est générée par un générateur aléatoire (6) exécuté par un circuit FPGA programmable (21).

20. Méthode selon la revendication précédente, **caractérisée en ce que** ledit générateur aléatoire (6) utilise une valeur d'initialisation (KINI) distribuée par la carte à puce (12).

21. Méthode selon l'une des revendications 18 ou 20, **caractérisée en ce que** ledit générateur aléatoire (6) utilise une valeur d'initialisation (KINI) qui est transmise au moyen d'un réseau de radiocommunication (10) audit appareil de décodage (5).

22. Méthode selon l'une des revendications 18 ou 20, **caractérisée en ce que** ledit générateur aléatoire (6) utilise une valeur d'initialisation (KINI) qui est transmise dans un format encrypté par un canal radio et qui est décryptée dans la carte à puce (12) dans ledit appareil de décodage (5).

23. Méthode selon la revendication 20, **caractérisée en ce que** ladite clé de décodage (K) est transmise au moyen du réseau de radiocommunication (10) audit appareil de décodage (5).

24. Méthode selon la revendication 18, **caractérisée en ce que** ladite clé de décodage (K) est transmise dans un format encrypté par un canal radio et est décryptée dans la carte à puce (12) dans ledit appareil de décodage (5).

25. Méthode selon l'une des revendications 17 à 24, **caractérisée en ce que** lesdites données d'image sont transmises par un canal de transmission DAB ou DVB.

26. Méthode selon l'une des revendications 17 à 24, **caractérisée en ce que** lesdites données d'image sont transmises par un canal de transmission PLC.

27. Méthode selon l'une des revendications 17 à 24, **caractérisée en ce que** lesdites données d'image sont transmises par un canal de transmission ADSL.

28. Méthode selon l'une des revendications 17 à 24, **caractérisée en ce que** lesdites données d'image sont transmises par un canal de transmission UMTS.

29. Méthode selon l'une des revendications 17 à 28, **caractérisée en ce que** l'identité de l'utilisateur (120) dans le réseau de radiocommunication (10) est déterminée sur la base d'un module d'identification (12).

30. Méthode selon l'une des revendications 17 à 29, **caractérisée en ce que** l'algorithme d'encodage utilisé par un émetteur radio défini (1) est modifié plusieurs fois et **en ce que** ledit circuit FPGA (4; 6) est reprogrammé plusieurs fois en conséquence.

31. Méthode selon la revendication précédente, **caractérisée en ce que** ledit émetteur radio (1) modifie la reconnaissance de différents programmes en adaptant ledit algorithme d'encodage.

32. Carte à puce (12) pour utilisation dans un appareil de décodage (5) selon l'une des revendications 1 à 16, pour décoder des données d'image numérique codée d'un émetteur radio (1), **caractérisée en ce qu'**elle comprend un module de décodage (4), qui comporte un circuit FPGA programmable avec plusieurs blocs logiques, dont l'interconnexion peut être modifiée en modifiant une mémoire FPGA (7) qui se trouve sur la carte à puce (12), selon laquelle ledit circuit FPGA est utilisé pour adapter un algorithme de décodage de données d'image et selon laquelle ladite mémoire FPGA (7) peut être mise à jour au moyen du réseau de radiocommunication (10).

33. Carte à puce (12) selon la revendication 32, **caractérisée en ce que** ledit circuit FPGA est un générateur aléatoire (6).

34. Carte à puce (12) selon la revendication 32, **caractérisée en ce que** ledit circuit FPGA permet de générer une valeur d'initialisation (KINI) pour un générateur aléatoire (6).

35. Carte à puce (12) selon l'une des revendications 32 à 34, **caractérisée en ce qu'**elle comprend de plus des données d'identification d'utilisateur (120) pour identifier l'utilisateur dans le réseau de radiocommunication (10).
